# EUROPEAN PATENT SPECIFICATION

(11) **EP 1 600 709 B1**
(45) Date of publication and mention of the grant of the patent: **28.02.2007**
(21) Application number: 04292605.5
(22) Date of filing: 03.11.2004
(51) Int. Cl.: F25B 13/00

(54) **Multi-air conditioner**
Mehrzonenklimaanlage
Conditionneur d'air à unités multiples

(30) Priority: 24.05.2004 KR 2004037009
(43) Date of publication of application: 30.11.2005
(73) Proprietor: LG ELECTRONICS INC., Seoul (KR)
(72) Inventor: Lee, Yoon-Been, Gangnam-Gu, Seoul (KR); Kim, Hyung-Soo, Seoul (KR); Jang, Sae-Dong, Gwamgmyeong, Gyeonggi-Do (KR); Chung, Baik-Young, Yongjong-Dong, Gyeyang-Gu, Incheon (KR); Oh, Sai-Kee, Yangcheon-Gu, Seoul (KR); Seo, Kyung-Won, Seoul (KR); Jeong, Ho-Jong, Geumcheon-Gu, Seoul (KR)
(74) Representative: Loisel, Bertrand

(56) References cited:
- EP-A- 0 638 777
- EP-A- 0 639 745
- EP-A- 1 526 346
- US-A- 5 279 131
- PATENT ABSTRACTS OF JAPAN vol. 013, no. 591 (M-913), 26 December 1989 (1989-12-26) & JP 01 247967 A (SANYO ELECTRIC CO LTD), 3 October 1989 (1989-10-03)

## Description

### BACKGROUND OF THE INVENTION

### 1. Field of the Invention

The present invention relates to a multi-air conditioner having a plurality of outdoor units and indoor units, and more particularly, to a multi-air conditioner which enables to equally distribute a refrigerant and oil by providing a pressure equalizing pipe for connecting the outdoor units and improves operational stability, reliability and efficiency by equally using components of the outdoor units.

### 2. Description of the Background Art

As for general air-conditioners, there is what is called a heat pump or an air conditioner for four seasons which is designed to allow the flow of a refrigerant to be reversed and thus capable of both cooling and heating.

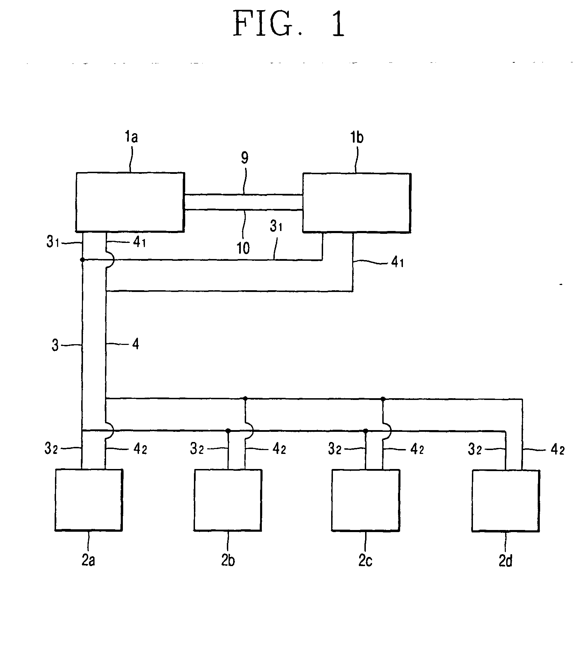

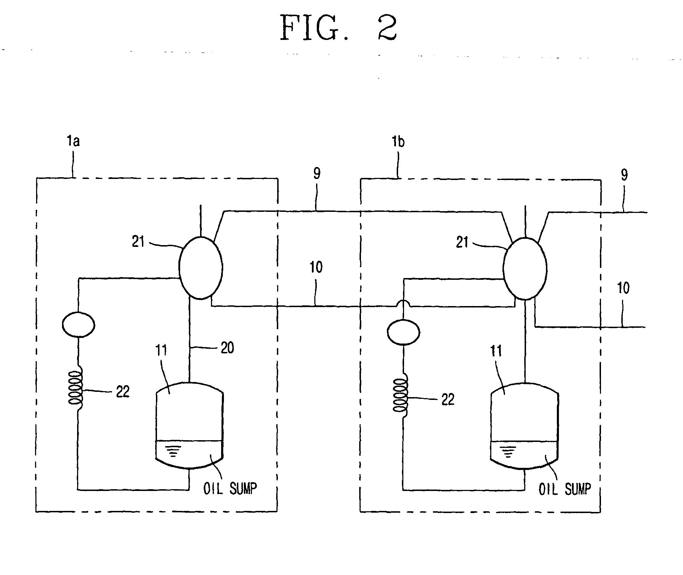

Meanwhile, a multi-air conditioner is provided with indoor units respectively disposed at a plurality of indoor spaces and with a plurality of outdoor units generally in order to effectively cope with a partial load meaning that only some of the indoor units are operated. Researches have been made with regard to connection structures of refrigerant conveying conduits in such a plurality of indoor units and outdoor units. As one example, a multi-air conditioner provided with a pressure equalizing pipe connecting between the outdoor units is disclosed in U. S. Pat. No. 5,279,131. Figures 1 and 2 show an air conditioner disclosed in U. S. Pat. No. 5,279,131.

Firstly, as shown in Figure 1, the conventional multi-air conditioner is provided with a plurality of indoor units 2A, 2B, 2C and 2D and a plurality of outdoor units 1A and 1B. Each of indoor units 2A, 2B, 2C and 2D is provided with a liquefied refrigerant conduit 3₂ and a gasified refrigerant conduit 4₂. The liquefied refrigerant conduit 3₂ and the gasified refrigerant conduit 4₂ are connected with a liquefied refrigerant conduit 3₁ and a gasified refrigerant conduit 3₂ which are provided to a plurality of outdoor units 1A and 1B, respectively. The outdoor units 1A and 1B are connected together by means of a pressure equalizing pipe 9 and an oil equalizing pipe 10 in order to prevent imbalances of oil fed to compressors of the respective outdoor units 1A and 1B.

Figure 2 is an enlarged view showing a connection relationship between the conventional outdoor units. As shown therein, a compressor 11 of the outdoor unit 1A is connected with an oil separator through a discharge pipe 20. The oil separated in the oil separator 21 returns to the compressor 11 through an oil returning pipe 22 connected with the compressor. The other outdoor unit 1B has the same structure as this. The pressure equalizing pipe 9 and the oil equalizing pipe 10 are connected between the oil separators 21 of each of outdoor units 1A and 1B to prevent imbalances of oil between the compressors 11.

An operation of such conventional multi-air conditioner is as follows.

In a cooling operation, a refrigerant takes indoor heat away from the indoor units 2A, 2B, 2C and 2D including indoor exchangers and moves to the outdoor units 1A and 1B through the liquefied refrigerant conduit 3 and the gasified refrigerant conduit 4. At this time, the refrigerant keeps low-pressure. The pressure of the refrigerant is increased in the compressors 11 provided to the outdoor units and so the high-pressure refrigerant exchanges the heat with the outdoor in the heat exchangers (not shown) of the outdoor units. After that, the pressure of the refrigerant drops in an expansion valve (not shown) and thus the refrigerant becomes low-pressure again. The low-pressure refrigerant circulates again to the indoor units.

In a heating operation, a refrigerant having emitted the heat to the indoor in the indoor exchangers moves to the outdoor units 1A and 1B, keeping high-pressure. The refrigerant which has become low-pressure in the expansion valve (not shown) exchanges the heat with the outdoor in the heat exchangers of the outdoor units 1A an 1B, and then moves to the compressor 11. The refrigerant whose pressure is increased circulates again to the indoor units.

Since the conventional multi-air conditioner in which the pressure equalizing conduit 9 and the oil equalizing conduit 10 communicate with each other between the oil separators 21 of the outdoor units 1A and 1B serves only to equalize the pressure of the high-pressure refrigerant in cooling/heating, it has problems as follows.

Firstly, in the heating operation, efficiency of a system is decreased due to uneven frosting since differences occur where the refrigerant becomes low-pressure between the outdoor units. In addition, in case there is a difference in a capacity of the compressors of the outdoor units or there are outdoor units in which compressors are not operated, operational stability and reliability of a system are decreased due to unequal distribution of the refrigerant and the oil.

Moreover, the pressure of the refrigerant is sharply increased where the refrigerant becomes high-pressure in the outdoor units being operated in the cooling operation, which may cause a damage to the compressors.

In addition, when some of the outdoor units are operated in both cooling and heating, elements being operated can be overloaded, and besides components cannot be evenly used. EP 1526 346, which is another European application Falling within the terms of Article 54(3) of the European Patent Convention, discloses a system and a method for controlling air conditioner. The air conditioner comprises indoor and outdoor units connected through a tube, as well as a pressure regulating tube connected between the outdoor units.

### SUMMARY OF THE INVENTION

Therefore, an object of the present invention is to provide a multi-air conditioner which enables to equally distributing a refrigerant and oil by providing a pressure equalizing pipe for connecting outdoor units and improve operational stability, reliability and efficiency of a system by evenly using components of the outdoor units.

To achieve these and other advantages and in accordance with the purpose of the present invention, as embodied and broadly described herein, there is provided a multi-air conditioner according to claim 1.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 is a construction view showing a connection relationship between the conventional outdoor units;
Figure 2 is an enlarged construction view showing the connection relationship between the conventional outdoor units;
Figure 3 is a construction view illustrating the flow of a fluid in cooling of a multi-air conditioner in accordance with the present invention;
Figure 4 is a control block diagram of the multi-conditioner in accordance with the present invention; and
Figure 5 is a construction view showing the flow of a fluid in heating of the multi-air conditioner in accordance with the present invention.

### DETAILED DESCRIPTION OF THE PREFERRED EMBODIMENTS

Reference will now be made in detail to the preferred embodiments of the present invention, examples of which are illustrated in the accompanying drawings.

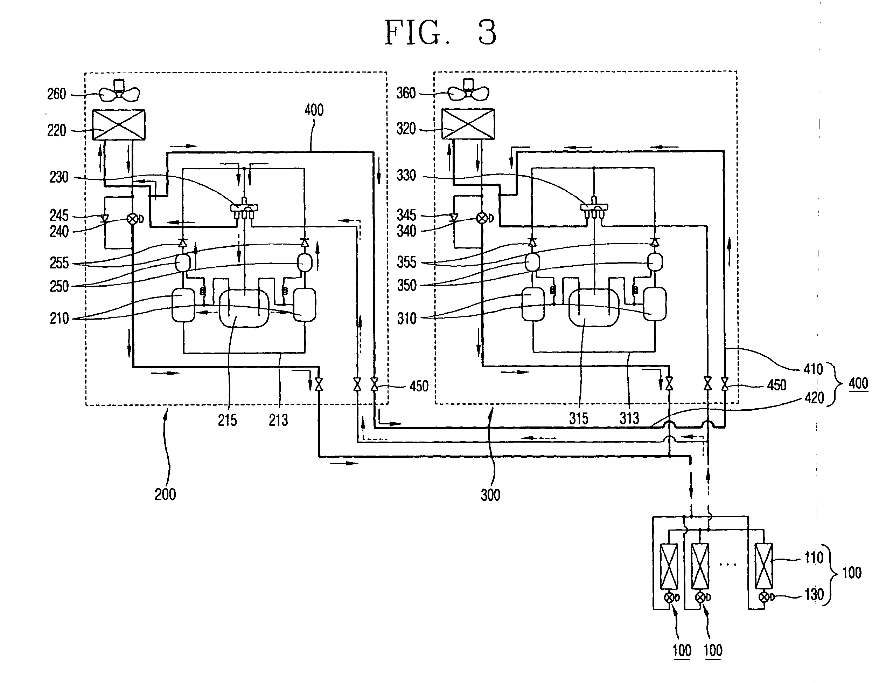

Figure 3 is a construction view of a multi-air conditioner in accordance with an embodiment of the present invention.

As shown therein, the multi-air conditioner in accordance with the present invention comprises: a plurality of indoor units 100 for exchanging the heat with indoor air; a plurality of outdoor units 200 and 300, each outdoor unit having an outdoor heat exchanger 220 for exchanging the heat and a compressor 210 for compressing a fluid; a connecting pipe for connecting the indoor units 100 with the outdoor units 200 and 300; and a pressure equalizing pipe 400 for communicating the outdoor heat exchanger 220 of one outdoor unit with the compressors 210 of at least one other outdoor unit.

The each indoor unit 100 include: an indoor heat exchanger 110 disposed at an indoor space and exchanging the heat with indoor air; and an indoor expansion valve 130 disposed to be connected with the indoor heat exchanger 110 and changing a fluid into low pressure low temperature.

The outdoor units 200 include: a plurality of compressors 210 for compressing the fluid and changing the compressed fluid into high temperature high pressure; an accumulator 215 for separating the fluid supplied to the compressors 210 into a gas and a liquid; a 4-way valve 230 disposed at a discharge side of a plurality of compressors 210 and switching a flow channel of the fluid; an outdoor heat exchanger 220 connected with the 4-way valve 230 and exchanging the heat with the outdoor; and an outdoor expansion valve 240 connected with the outdoor heat exchanger 220 and changing the fluid into low temperature low pressure.

A plurality of compressors 210 are connected to communicate with an oil equalizing pipe 213 in order to properly distribute oil for each compressor, and oil separators 250 for separating the oil included in a refrigerant discharged from the compressors 210 and supplying the oil to an inlet side of the compressors 210. Along a flow direction of the fluid, check valves 255 are provided to the lower oil separators 250, respectively, preventing a backflow of the refrigerant.

The accumulator 215 is connected to the inlet side of the compressors 210, and provides a gaseous fluid alone to the compressors and returns a liquid fluid to the accumulator 215.

The 4-way valve 230 is connected with the outdoor heat exchanger 220, the accumulator 215 and the indoor units 100 in addition to the discharge side of the compressors 210, and changes a flow direction of the fluid according to cooling or heating.

The outdoor heat exchanger 220 is provided with an outdoor unit fan 260 for better heat exchanging. The outdoor heat exchanger 220 has one side provided with the check valve 245 and the outdoor expansion valve 240, and is connected with the indoor units 100.

In heating, the fluid passes through the outdoor expansion valve 240 is changed into low temperature low pressure, whereas in cooling, the fluid makes a detour toward the check valve 245.

The other outdoor unit 300 has the same construction as the above.

The pressure equalizing unit 400 includes: an inner piping part 410 having an end portion of one side which is connected to piping for connecting the 4-way valve 230 with the outdoor heat exchanger 220 and disposed in each of outdoor units 200 and 300; and a connecting piping part 420 connected to communicate with each of other ends of the inner piping part 410 to make the outdoor units 200 and 300 communicate with each other.

Each of inner piping part 410 has opening/closing valves 450 for opening/closing a flow channel, and each of opening/closing valves is mainly in a state of being opened after installation.

There can be a plurality of pressure equalizing pipes 400 .

As for the pressure equalizing pipe 400, piping for connecting the 4-way valve 230 with the outdoor heat exchangers 220 of the outdoor units is preferably positioned to connect the outdoor units 200 and 300 to each other, like the embodiment of the present invention.

In addition, in the pressure equalizing pipe 400, piping for connecting the 4-way valve 230 with the compressors 210 of the outdoor units can be positioned to connect the outdoor units 200 and 300 to each other.

Preferably, the multi-air conditioner of the present invention further comprises a control unit for controlling the expansion valve and the outdoor unit fan of at least one among the outdoor units in which compressors are not operated.

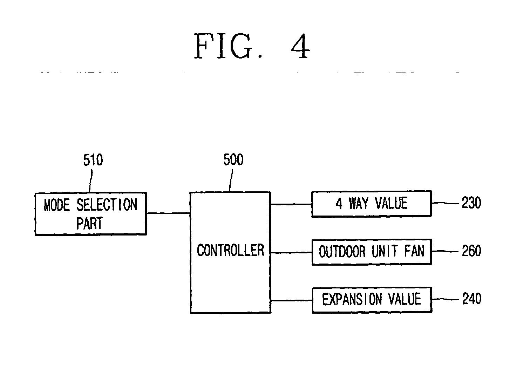

Figure 4 is a control block diagram of the multi-air conditioner in accordance with the present invention.

As shown in Figure 4, the control unit includes: a mode selection part 510 for selecting one from a cooling operation and a heating operation; a controller 500 receiving a signal of the mode selection part 510 and executing a control program; and a connection means for transmitting electric signals to the 4-way valve 230, the outdoor unit fan 260 and the expansion valve 240, respectively according to the signal of the controller 500.

The controller 500 is made up of a microprocessor, or the like, has the control program, and selectively operates the 4-way valve 230, the outdoor unit fan 260 and the expansion valve 240 according to the selected mode. According to modes, the controller changes a flow direction of the fluid by changing the flow channel of the 4-way valve, or operates the outdoor unit fan and the expansion valve of the outdoor units which are not operated when the compressors of some outdoor units are operated.

Hereinafter, an operation effect of the present invention is described as follows.

Firstly, with reference to Figure 3, as for the cooling operation, the refrigerant carrying out the heat exchanging in the indoor units 100 passes through the 4-way valve 230. At this time, in the control unit, the flow channel of the 4-way vale 230 is controlled and the fluid is made to flow in the accumulator 215. A gaseous fluid from the fluid having flowed in the accumulator 215 is supplied to the compressors 210 and a liquid fluid returns to the accumulator 215. The gaseous fluid having compressed at the compressors 210 flows toward the corresponding outdoor heat exchanger 220 through the 4-way valve 230. At this time, a part of the fluid diverges and along the pressure equalizing pipe 400, it is mixed with the fluid flowing toward the outdoor heat exchanger 320 of the other outdoor unit 300, thereby equalizing the pressure. The refrigerants having exchanged the heat by passing through each of the outdoor heat exchangers 220 and 320 get together to flow to the indoor units 100 being operated, and flow to the 4-way valve 230 of the outdoor units being operated after carrying out the cooling action in each of the indoor heat exchangers 110. Repeating such a process carries out the cooling action. At this time, a pipe in which the high-pressure fluid flows is marked by a thick line in Figure 3. As shown therein, in the cooling operation, the pressure equalizing pipe 400 serves to equalize the high pressure.

A case that some of the outdoor units are operated is as follows. For convenience of description, let us suppose that the compressors 210 are all operated in the left outdoor unit 200, and the compressors 310 are not operated in the right outdoor unit 300. When only some of a plurality of indoor units are operated, some of the outdoor units are not operated often. The flow of the fluid regarding this is shown with arrows in Figure 3. As shown therein, the fluid having exchanged the heat in the indoor units 100 passes through the compressors 210 of the outdoor unit 200 in which the compressors 210 are operated by the 4-way valve 230 and flows to the outdoor heat exchanger 220. At this time, a part of the fluid diverges and along the pressure equalizing unit 400, it is mixed with the fluid flowing toward the outdoor heat exchanger 320 of the outdoor unit 300 in which the compressors 310 are not operated, thereby equalizing the high pressure. The control unit makes the outdoor unit fan 360 of the outdoor unit 300 in which the compressors are not operated rotated.

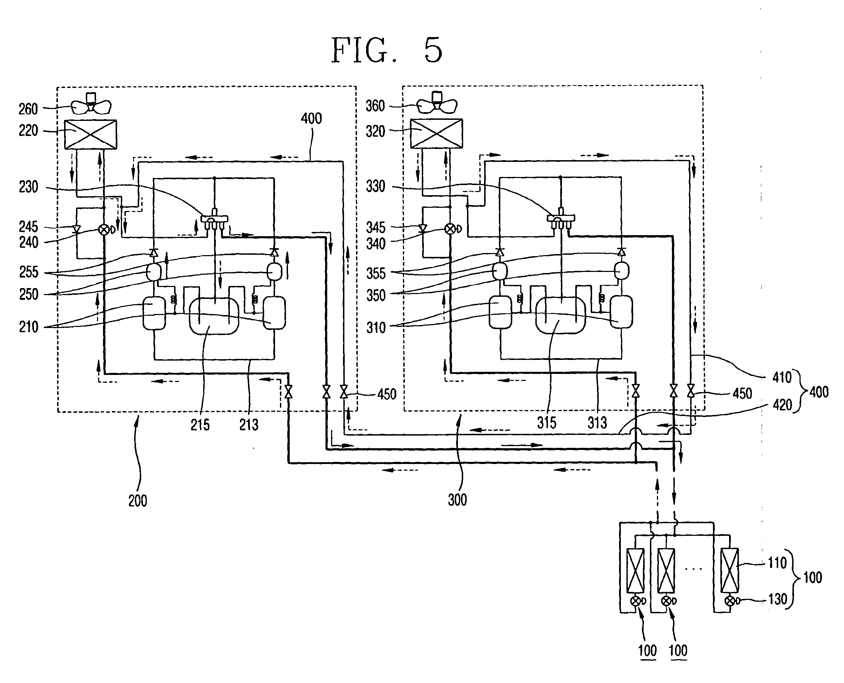

Next, the heating operation is as follows, referring to Figure 5. Like Figure 3, a pipe in which the high-pressure fluid flows is marked by a thick line in Figure 5. The fluid having carried out the heat exchanging in the indoor units 100 is decompressed and expanded, passing through the expansion valve 240, and absorbs a latent heat to be evaporated, passing through the corresponding outdoor heat exchanger 220. After that, the fluid passes through the 4-way valve 230. At this time, a part of the fluid diverges and along the pressure equalizing pipe 400, it is mixed with the fluid flowing toward the 4-way valve 230 of the other outdoor unit 300, thereby equalizing the low pressure. By controlling the 4-way valve 230, the fluid having passed through the 4-way valve 230 flows into the compressors 210 through the accumulator 215. The fluid discharged from the compressors 210 passes through the 4-way valve 230 again and flows to the indoor unit 100 being operated. Repeating such a process carries out the heating. If some of the outdoor units are operated, as the flow of the fluid is shown with arrows in Figure 5, a part of the fluid diverges and along the pressure equalizing pipe 400, it is mixed with the fluid flowing toward the 4-way valve 330 of the outdoor unit 300 in which the compressors are not operated. At this time, the control unit controls an opening of the expansion valve 320 of the outdoor unit 300 which is not operated, and makes the outdoor unit fan 360 rotated.

In the above-described embodiment, two outdoor units are constructed, and the opening/closing valves for opening/closing the pressure equalizing pipe are installed to open/close the inner piping unit of each of the outdoor units and are mainly in a state of being opened after installation of each of the outdoor units. However, it is also possible that in case of more than three outdoor units, the opening/closing valves are constructed as electric ones which are opened/closed by an electric power in each inner piping part, and in case there are a plurality of outdoor units in which compressors are not operated, taking the amount of cooling load and power consumption into accounts, the control unit selectively controls the electric valves in order that a refrigerant flows to the outdoor heat exchanger in some of the outdoor units of which the compressors are not operated and the refrigerant does not flow in others.

In the embodiment, the air conditioner in which each of outdoor units is provided with the 4-way valve for switching the flow channel of the fluid is taken as an example, but it goes without saying that the present invention can be applied to an air conditioner not provided with the 4-way valve.

As described so far, the multi-air conditioner in accordance with the present invention is capable of preventing efficiency degradation of a system due to uneven frosting by equalizing the pressure between where the pressure of the refrigerant becomes low-pressure in the outdoor units in the heating operation.

In addition, when there occurs a difference in a capacity of the compressors between the outdoor units or there are outdoor units of which compressors are not operated, operational stability and reliability of a system can be secured by equally distributing a refrigerant and oil.

Moreover, by equalizing high pressure of the outdoor units which are operated in a cooling operation, the pressure is sharply increased to prevent a damage to the compressors.

Further, when some of the outdoor units are operated in both cooling and heating, efficiency of the system can be raised by evenly using components.

As the present invention may be embodied in several forms without departing from the essential characteristics thereof, it should also be understood that the above-described embodiments are not limited by any of the details of the foregoing description, unless otherwise specified, but rather should be construed broadly within the scope as defined in the appended claims, and therefore all changes and modifications that fall within the metes and bounds of the claims, or equivalence of such metes and bounds are therefore intended to be embraced by the appended claims.

## Claims

1. A multi-air conditioner comprising:
a plurality of indoor units (100) for exchanging the heat with indoor air;
a plurality of outdoor units (200,300) having an accumulator (215) for separating the fluid supplied to a compressor (210) into a gas and a liquid, a 4-way valve communicating with the compressor and switching a flow channel of the fluid, an outdoor expansion valve (240) connected with an outdoor heat exchanger and changing the fluid into low temperature low pressure;
a connecting pipe for connecting the indoor units with the outdoor units;
a pressure equalizing pipe (400) for communicating the outdoor heat exchanger of one outdoor unit with the compressor of at least one other outdoor unit;
**characterized in that** the pressure equalizing pipe connects the portion between the 4-way valve and the compressor of one outdoor unit with the portion between the 4-way valve and the compressor of at least one other outdoor unit.

2. The multi-air conditioner of claim 1, wherein the pressure equalizing pipe (400) comprises:
an inner piping part (410) disposed in outdoor units (200,300); and
a connecting piping part (420) connected to each of other ends of the inner piping part to make the outdoor units communicate with each other.

3. The multi-air conditioner of claim 1, wherein each indoor unit (100) comprises:
an indoor heat exchanger (110) disposed at an indoor space and exchanging the heat with indoor air; and
an indoor expansion valve (130) disposed to be connected with the indoor heat exchanger and changing the fluid into low pressure low temperature.

4. The multi-air conditioner of claim 1, wherein the 4-way valve (230) is connected with the outdoor heat exchanger (220).

5. The multi-air conditioner of claim 4, wherein the pressure equalizing pipe (400) connects the portion between the 4-way valve (230) and the outdoor heat exchanger (220) of one outdoor unit (200,300) with the portion between the 4-way valve (230) and the outdoor heat exchanger (220) of at least one other outdoor unit (200,300).

6. The multi-air conditioner of claim 1, wherein each of the outdoor units (200,300) has at least two compressors (210).

7. The multi-air conditioner of claim 6, wherein the plurality of compressors (210) of outdoor unit communicated by an oil equalizing pipe (213) for distributing an oil.

8. The multi-air conditioner of claim 7, further comprising:
oil separators (250) connected with a discharge side of a plurality of compressors (210), separating oil included in the discharged fluid and supplying the oil again to an inlet side of the compressors (210).

9. The multi-air conditioner of claim 8, further comprising:
check valves (255) for preventing a backflow of the refrigerant in the lower oil separators (250).

10. The multi-air conditioner of claim 1, further comprising:
an accumulator (215) connected to the inlet side of the compressors (210), and providing a gaseous fluid alone to the compressors and returning a liquid fluid.

11. The multi-air conditioner of claim 1, further comprising:
a control unit for controlling the expansion valve and the outdoor unit fan of at least one among the outdoor units in which compressors are not operated.

12. The multi-air conditioner of claim 1, further comprising:
opening/closing valves (450) for opening/closing the pressure equalizing pipe (400) in the pressure equalizing pipe.

13. The multi-air conditioner of claim 12, wherein the opening/closing valves (450) are electric ones and further comprise a control unit.

## Patentansprüche

1. Multi-Klimaanlage mit:
mehreren Inneneinheiten (100) zum Austauschen von Wärme mit Innenraumluft;
mehreren Außeneinheiten (200, 300) mit einem Druckspeicher (215) zum Trennen des einem Kompressor (210) zugeführten Fluids in ein Gas und eine Flüssigkeit, einem Vierwegeventil, das mit dem Kompressor verbunden ist und einen Fluidströmungskanal schaltet, und einem Außen-Expansionsventil (240), das mit einem Außen-Wärmetauscher verbunden ist und das Fluid in ein Niedrigtemperatur-Niedrigdruck-Fluid umwandelt;
einem Verbindungsrohr zum Verbinden der Inneneinheiten mit den Außeneinheiten; und
einem Druckausgleichsrohr (400) zum Verbinden des Außen-Wärmetauschers einer Außeneinheit mit dem Kompressor mindestens einer anderen Außeneinheit;
**dadurch gekennzeichnet, dass**
das Druckausgleichsrohr einen Abschnitt zwischen dem Vierwegeventil und dem Kompressor einer Außeneinheit mit einem Abschnitt zwischen dem Vierwegeventil und dem Kompressor mindestens einer anderen Außeneinheit verbindet.

2. Multi-Klimaanlage nach Anspruch 1, wobei das Druckausgleichsrohr (400) aufweist:
einen in Außeneinheiten (200, 300) angeordneten inneren Rohrleitungsabschnitt (410); und
einen Verbindungsrohrleitungsabschnitt (420), der mit jeweiligen anderen Enden des inneren Rohrleitungsabschnitts verbunden ist, um zu veranlassen, dass die Außeneinheiten miteinander kommunizieren.

3. Multi-Klimaanlage nach Anspruch 1, wobei jede Inneneinheit (100) aufweist:
einen Innen-Wärmetauscher (110), der in einem Innenraum angeordnet ist und Wärme mit Innenraumluft austauscht; und
ein Innen-Expansionsventil (130), das derart angeordnet ist, dass es mit dem Innen-Wärmetauscher verbunden werden kann und das Fluid in ein Niedrigdruck-Niedrigtemperatur-Fluid umwandelt.

4. Multi-Klimaanlage nach Anspruch 1, wobei das Vierwegeventil (230) mit dem Außen-Wärmetauscher (220) verbunden ist.

5. Multi-Klimaanlage nach Anspruch 4, wobei das Druckausgleichsrohr (400) einen Abschnitt zwischen dem Vierwegeventil (230) und dem Außen-Wärmetauscher (220) einer Außeneinheit (200, 300) mit einem Abschnitt zwischen dem Vierwegeventil (230) und dem Außen-Wärmetauscher (220) mindestens einer anderen Außeneinheit (200, 300) verbindet.

6. Multi-Klimaanlage nach Anspruch 1, wobei jede Außeneinheit (200, 300) mindestens zwei Kompressoren (210) aufweist.

7. Multi-Klimaanlage nach Anspruch 6, wobei die mehreren Kompressoren (210) einer Außeneinheit durch ein Ölausgleichsrohr (213) zum Verteilen von Öl miteinander verbunden sind.

8. Multi-Klimaanlage nach Anspruch 7, ferner mit:
Ölabscheidern (250), die mit einer Auslassseite mehrerer Kompressoren (210) verbunden sind, zum Trennen von im abgegebenen Fluid enthaltenem Öl und zum Zurückführen des Öls zu einer Einlassseite der Kompressoren (210).

9. Multi-Klimaanlage nach Anspruch 8, ferner mit:
Sperrventilen (255) zum Verhindern eines Rückflusses eines Kühlmittels in die unteren Ölabscheider (250).

10. Multi-Klimaanlage nach Anspruch 1, ferner mit:
einem Druckspeicher (215), der mit der Einlassseite der Kompressoren (210) verbunden ist und den Kompressoren ausschließlich ein gasförmiges Fluid zuführt und ein flüssiges Fluid zurückführt.

11. Multi-Klimaanlage nach Anspruch 1, ferner mit:
einer Steuereinheit zum Steuern des Expansionsventils und eines Ventilators mindestens einer Außeneinheit unter den Außeneinheiten, in denen keine Kompressoren in Betrieb sind.

12. Multi-Klimaanlage nach Anspruch 1, ferner mit:
im Druckausgleichsrohr angeordneten Öffnungs-/Schließventilen (450) zum Öffnen/Schließen des Druckausgleichsrohrs (400).

13. Multi-Klimaanlage nach Anspruch 12, wobei die Öffnungs-/Schließventile (450) elektrische Ventile sind und ferner eine Steuereinheit aufweisen.

## Revendications

1. Un climatiseur à unités multiples comprenant :
une multiplicité d'unités intérieures (100) pour échanger de la chaleur avec l'air intérieur;
une multiplicité d'unités extérieures (200, 300) ayant un accumulateur (215) pour séparer le fluide fourni à un compresseur (210) en un gaz et un liquide, une vanne à 4 voies communiquant avec le compresseur et changeant une voie de circulation du fluide, une soupape d'expansion extérieure (240) reliée à un échangeur de chaleur extérieur et changeant le fluide en un fluide à basse pression et basse température; un tuyau de raccordement pour raccorder les unités intérieures et les unités extérieures;
un tuyau d'égalisation de pression (400) pour faire communiquer l'échangeur de chaleur extérieur d'une unité extérieure avec le compresseur d'au moins une autre unité extérieure;
**caractérisé en ce que** le tuyau d'égalisation de pression raccorde la partie entre la vanne à 4 voies et le compresseur d'une unité extérieure avec la partie entre la vanne à 4 voies et le compresseur d'au moins une autre unité extérieure.

2. Le climatiseur à unités multiples de la revendication 1, dans lequel le tuyau d'égalisation de pression (400) comprend :
un élément de tuyauterie intérieur (410) disposé dans des unités intérieures (200, 300); et
un élément de tuyauterie de raccordement (420) branché à chacune des autres extrémités de l'élément de tuyauterie intérieur, pour faire communiquer mutuellement les unités extérieures.

3. Le climatiseur à unités multiples de la revendication 1, dans lequel chaque unité intérieure (100) comprend :
un échangeur de chaleur intérieur (110) disposé dans un espace intérieur et échangeant de la chaleur avec l'air intérieur; et
une soupape d'expansion intérieure (130) disposée de façon à être reliée à l'échangeur de chaleur intérieur et changeant le fluide en un fluide à basse température et basse pression.

4. Le climatiseur à unités multiples de la revendication 1, dans lequel la vanne à 4 voies (230) est reliée à l'échangeur de chaleur extérieur (220).

5. Le climatiseur à unités multiples de la revendication 4, dans lequel le tuyau d'égalisation de pression (400) relie la partie entre la vanne à 4 voies (230) et l'échangeur de chaleur extérieur (220) d'une unité extérieure (200, 300) à la partie entre la vanne à 4 voies (230) et l'échangeur de chaleur extérieur (220) d'au moins une autre unité extérieure (200, 300).

6. Le climatiseur à unités multiples de la revendication 1, dans lequel chacune des unités extérieures (200, 300) a au moins deux compresseurs (210).

7. Le climatiseur à unités multiples de la revendication 6, dans lequel la multiplicité de compresseurs (210) d'une unité extérieure communiquent par un tuyau d'égalisation d'huile (213) destiné à distribuer une huile.

8. Le climatiseur à unités multiples de la revendication 7, comprenant en outre :
des séparateurs d'huile (250) reliés à un côté d'évacuation d'une multiplicité de compresseurs (210), séparant une huile incluse dans le fluide évacué et fournissant à nouveau l'huile à un côté d'entrée des compresseurs (210).

9. Le climatiseur à unités multiples de la revendication 8, comprenant en outre :
des clapets de retenue (255) pour empêcher un reflux du réfrigérant dans les séparateurs d'huile inférieurs (250).

10. Le climatiseur à unités multiples de la revendication 1, comprenant en outre :
un accumulateur (215) relié au côté d'entrée des compresseurs (210), et fournissant un fluide gazeux seul aux compresseurs, et retournant un fluide liquide.

11. Le climatiseur à unités multiples de la revendication 1, comprenant en outre :
une unité de commande pour commander la soupape d'expansion et le ventilateur d'unité extérieure d'au moins une parmi les unités extérieures dans lesquelles des compresseurs ne sont pas mis en fonction.

12. Le climatiseur à unités multiples de la revendication 1 , comprenant en outre :
des vannes d'ouverture / fermeture (450) pour ouvrir / fermer le tuyau d'égalisation de pression (400), dans le tuyau d'égalisation de pression.

13. Le climatiseur à unités multiples de la revendication 12, dans lequel les vannes d'ouverture / fermeture (450) sont des vannes électriques et comprennent en outre une unité de commande.
